# EUROPEAN PATENT APPLICATION

(11) **EP 1 739 723 A2**
(43) Date of publication of application: **03.01.2007**
(21) Application number: 06013144.8
(22) Date of filing: 26.06.2006
(51) Int. Cl.: H01J 61/46

(54) **Lamp with phosphor layer on an exterior surface and method of applying the phosphor layer**

(30) Priority: 28.06.2005 US 169190
(71) Applicant: OSRAM-SYLVANIA INC., 01923 Danvers, MA (US)
(72) Inventor: Klinedinst, Keith, A., 01749 Hudson MA (US); Moskowitz, Philip, E., 01833 Georgetown Massachusetts (US)
(74) Representative: Raiser, Franz

(57) **Abstract**

A method of making a mercury-free fluorescent lamp in which a layer of phosphor particles are applied to an exterior surface of the lamp envelope, includes preparing a sol-gel precursor solution that, when dried, leaves a sol-gel residue material, such as thin film SiO₂, that coats the phosphor particles and resists removal of the phosphor particles from the exterior surface, dipping the envelope into the sol-gel precursor solution, and, after removing the envelope from the solution, drying the sol-gel precursor solution to form a network of the sol-gel residue material on the exterior surface that meshes with the layer of phosphor particles. The sol-gel residue material attaches the phosphor particles to the exterior surface with sufficient strength so that the lamp can be handled as if the layer of phosphor particles were on the interior of the envelope.

## Description

### Background of the Invention

The present invention is directed to fluorescent lamps, and more particularly to fluorescent lamps that have a coating of phosphor particles on an exterior surface of the lamp envelope.

The interior of a tubular glass envelope of a prior art fluorescent lamp is typically coated with a mixture of luminescent materials (phosphors) that are selected to produce light with the desired brightness and color characteristics when the lamp is operated. The phosphors emit visible light when stimulated by ultraviolet radiation that is produced when the gas in the envelope is electrically activated. Until recently, this gas has included mercury.

Recent efforts have been made to reduce or eliminate mercury from lighting applications, e.g., fluorescent lamps are being made with a mercury-free gas (meaning no or insubstantial amounts of mercury). Mercury-free fluorescent lamps have a gas discharge with emissions in the near-ultraviolet/blue portion of the electromagnetic spectrum. However, the molecular species present with these gas discharges can react with the phosphors on the interior of the lamp envelope and cause the phosphors to suffer unacceptably high degradation rates.

U.S. Patent 5,866,039 discloses a way of protecting phosphors on an interior surface of a lamp envelope from the plasma contained within the envelope. A luminescent composition applied to the interior surface is a uniform admixture of phosphors and a sufficient amount of a sol-gel compound to substantially encapsulate the phosphors. The phosphors and the sol-gel are first blended together and then uniformly coated on the substrate and dried. The sol-gel dielectric formed from the mixture protects the encapsulated phosphors from the plasma in the device.

### Summary of the Invention

Another way to solve the problem is to isolate the phosphors from the gas discharge by placing the phosphors on the exterior of the lamp envelope, instead of the interior. The lamp envelope can be made of SiO₂-based glass that transmits light with wavelengths of 300 nm or more to ensure that the phosphors on the exterior are activated by the ultraviolet radiation from the gas discharge. However, this solution causes a further problem because the phosphors on the exterior of the lamp can be removed, destroyed, or physically modified during normal handling of the lamp or by accidental contact.

The inventors have solved this problem by providing a novel lamp having phosphor particles attached to its exterior surface with sufficient strength so that the lamp can be handled as if the phosphor particles were on the interior of the envelope.

Another aspect of the present invention is a novel method of applying and resisting removal of the phosphor particles in which the phosphor particles are held on the exterior surface of the lamp envelope with a residue material from a sol-gel process.

A further aspect of the present invention is a novel mercury-free fluorescent lamp and method of making the lamp in which a layer of phosphor particles are applied to an exterior surface of the lamp envelope as a network of phosphor particles, in which a sol-gel precursor solution is prepared so that, when dried, the solution leaves a sol-gel residue material, such as thin film SiO₂, that coats the phosphor particles and resists removal of the phosphor particles from the exterior surface, and in which the envelope with the phosphor particles applied is dipped into the sol-gel precursor solution and the sol-gel precursor solution is dried to form a network of the sol-gel residue material on the exterior surface that meshes with the network of phosphor particles. The sol-gel residue material attaches the phosphor particles to the exterior surface with sufficient strength so that the lamp can be handled as if the layer of phosphor particles were on the interior of the envelope.

These and other features, objects, and advantages of the invention will be apparent to those of skill in the art of the present invention after consideration of the following drawings and description of preferred embodiments.

### Brief Description of the Drawings

Figure 1 is a partial cross-sectional illustration an embodiment of the present invention.
Figure 2 is a cross section of a part of the embodiment of Figure 1.
Figure 3a is a scanning electron micrograph of a phosphor layer without the sol-gel residue material and Figure 3b is a scanning electron micrograph of a phosphor layer with the sol-gel residue material.
Figure 4a is a scanning electron micrograph of a cross section of a phosphor layer without the sol-gel residue material and Figure 4b is a scanning electron micrograph of a cross section of a phosphor layer with the sol-gel residue material.
Figure 5a is a scanning electron micrograph of a phosphor layer surface without the sol-gel residue material and Figure 5b is a scanning electron micrograph of a phosphor layer surface with the sol-gel residue material.

### Description of Preferred Embodiments

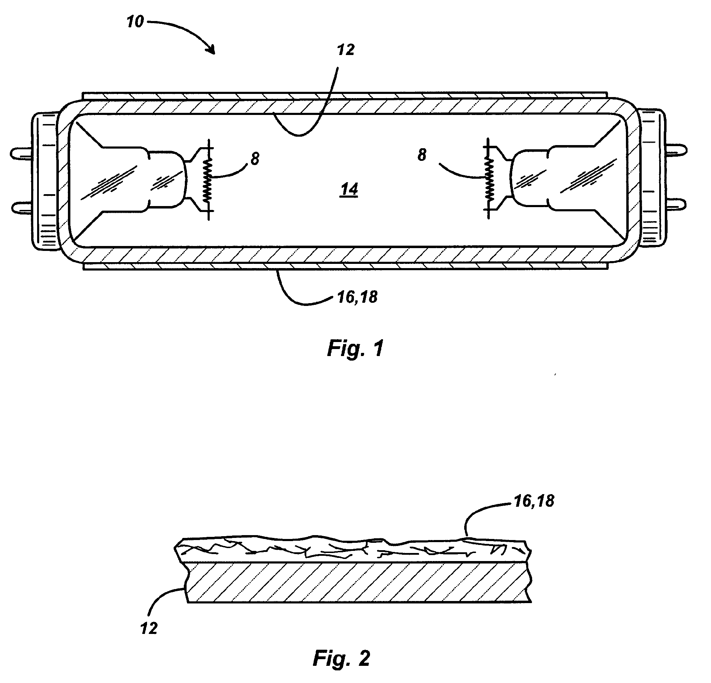

With reference now to Figures 1-2, a fluorescent lamp 10 includes an ultraviolet radiation transmissive envelope 12 having an interior 14 enclosing a gas that emits ultraviolet radiation when stimulated by electrical discharge between electrodes 8, a first network of phosphor particles 16 on an exterior surface of envelope 12, and a second network of a sol-gel residue material 18 that (a) is transparent to visible light and ultraviolet radiation whose wavelength is at least 300 nm, (b) coats the phosphor particles, and (c) resists removal of the first network from the exterior surface, where the second network is on the exterior surface and meshes within the first network. The sol-gel residue material is preferably one of SiO₂, Al₂O₃, Y₂O₃ and Sc₂O₃. The gas in lamp 10 is preferably mercury-free.
The first network of phosphor particles 16 is porous and deposited conventionally on the exterior surface of envelope 12. The exposed surfaces of the phosphor particles and the exposed parts of the underlying exterior surface are conformally coated with a thin film of the material that is formed with a sol-gel process. The resulting sol-gel residue material 18 forms a network that firmly bonds the phosphor particles to each other and strongly bonds the entire network of phosphor particles to the exterior surface of envelope 12. The resulting structure is two interpenetrating networks of phosphor particles 16 and sol-gel residue material 18, with the latter effectively immobilizing the former and attaching the former to the envelope. The sol-gel residue material 18 protects the phosphor particles 16 from being removed, destroyed, or physically modified during normal handling of the lamp or by accidental contact. The residue material 18 also provides the strength, resistance to peeling, adherence and scratch resistance required of the phosphors particles on the exterior of the lamp so that the that the lamp can be handled as if the phosphor particles were on the interior of the envelope.

The lamp is made by a method that includes the steps of applying the first network of phosphor particles 16 to the exterior surface of envelope 12, preparing the sol-gel precursor solution that, when dried, leaves sol-gel residue material 18 described above, dipping envelope 12 with the first network applied to the exterior surface into the sol-gel precursor solution, and drying the sol-gel precursor solution to form the second network of the sol-gel residue material 18 on the exterior surface that meshes within the first network.

The drying step may include the steps of removing a solvent from the sol-gel precursor solution by drying the envelope in an air-filled oven at a first temperature, repeating the dipping and the solvent removing steps, and removing residual solvent by drying the envelope at a temperature higher than the first temperature in the oven.

The lamp and method described herein are relatively inexpensive and compatible with large-scale production methods. Further, the process does not modify the carefully engineered physical and optical properties of the phosphors or significantly diminish the visible light from the lamp.

An example of the method follows and is but one of many possible applications of the method. The sol-gel process is a developed technology and the interactions among the processing variables are fairly will understood, especially in the case of SiO₂ sol-gel processes. The process variables include: choice of precursor (typically tetraethoxysilane (TEOS) or tetramethoxysilane (TMOS) for SiO₂ sol-gel materials); choice of solvent (typically ethanol (EtOH) or methanol (MeOH) with TEOS or TMOS precursor); catalyst type, identity and concentration; precursor concentration and H₂O/precursor molar ratio; deposition conditions (time, temperature, withdrawal and drainage rates, solvent vapor pressure, etc.); solvent evaporation rate; aging conditions (time and temperature after gellation); rate of heating (to eliminate residual solvent, complete the condensation reactions, and eliminate organics) and maximum temperature; use of a subsequent sintering process (to remove last traces of solvent and products of condensation reactions, and to densify the material), and temperature and time profiles. The properties of the sol-gel residue material and thus the network it forms are largely controlled by these processing variables, and one of skill in the art will appreciate how to select values for the variables to achieve the desired result.

In an exemplary embodiment, a layer of phosphor particles (Sylvania type 251 YAG, namely Y₃Al₅O₁₂:Ce³⁺) was deposited on a glass substrate by dipping the substrate in an organic dispersion of the phosphors. The substrate was then heated to remove the volatile components of the dispersion. The resulting phosphor layer was between 20 and 25 micrometers thick and was only weakly bonded to the glass substrate (it could be removed by even slight contact). A second substrate was also prepared and was not subjected to the further treatment below in order to compare the treated and untreated phosphor layers.

A sol-gel precursor solution appropriate for an SiO₂ type of sol-gel residue material was prepared using TEOS as the metalorganic precursor with ethanol as the solvent, and an acid catalyst (HNO₃), with an H₂O/precursor molar ratio of 4.0. More particularly, 183 ml of EtOH was added to a solution of 3 ml of HNO₃ in 16 ml of H₂O. To this was added, with rapid stirring, 50 ml of TEOS.

The phosphor-coated substrate was placed into the precursor solution and withdrawn (this includes processes wherein the phosphor coated substrate is at least partially surrounded by the solution all at once or in steps, such as complete or partial submersion, pouring the solution onto the substrate and misting the solution onto the substrate). Submersion (e.g., dipping the substrate into the solution) is the simplest and preferred technique. The excess solution was drained and the solvent was removed by heating the substrate in an air-filled oven at 125°C. This process was repeated three more times, after which the substrate was placed in the air-filled oven and heated to about 450°C for two hours to eliminate residual solvent and to complete the condensation reactions leading to the formation of the dense SiO₂. The substrate was then cooled in air.

The sol-gel treatment may be carried out either before or after the lamp envelope is filled with the appropriate gas mixture and sealed.

A comparison was made between an untreated phosphor layer and a treated phosphor layer.

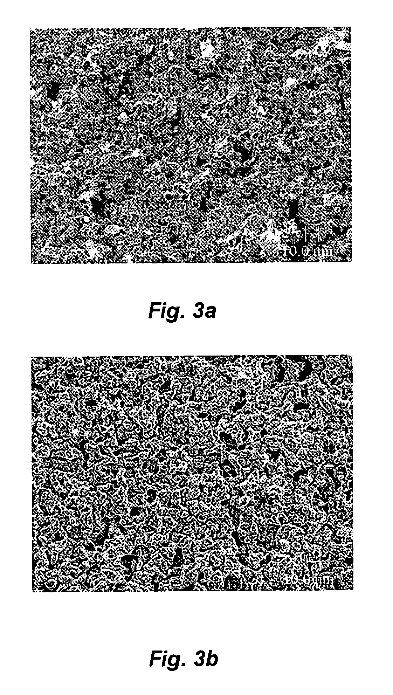

Figure 3a is a scanning electron micrograph of a phosphor layer without the sol-gel residue material and Figure 3b is a scanning electron micrograph of a phosphor layer with the sol-gel residue material. The figures show that the phosphor layers are a network of apparently randomly distributed phosphor particles or particle agglomerates, and that there is no apparent difference between the physical appearances of the treated and untreated layers.

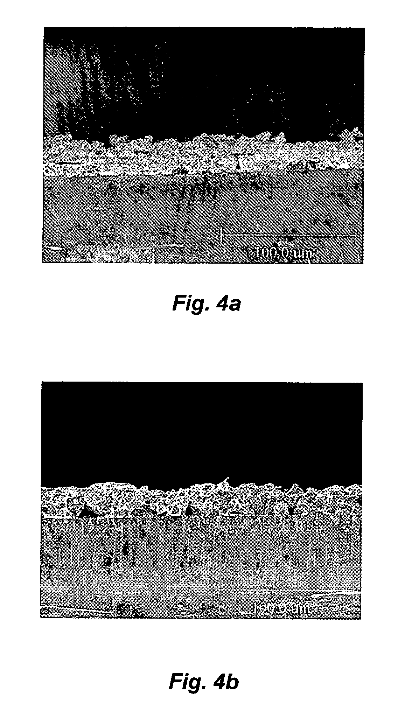

The cross sections of the treated and untreated layers were also compared. Figure 4a is a scanning electron micrograph of a cross section of a phosphor layer without the sol-gel residue material and Figure 4b is a scanning electron micrograph of a cross section of a phosphor layer with the sol-gel residue material. These figures also show that there is no apparent difference between the physical appearances of the treated and untreated layers.

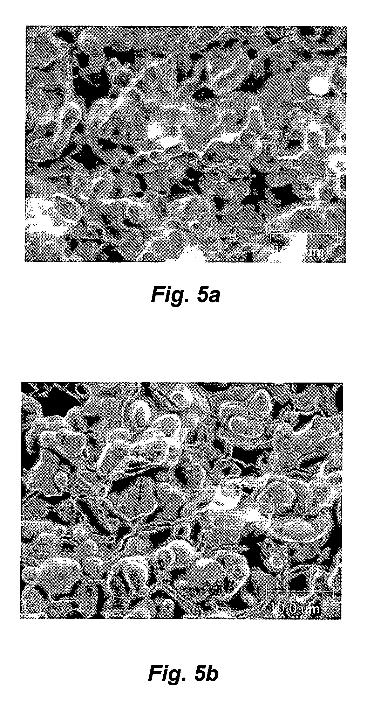

In addition, the treated and untreated layers were compared with higher resolution images of the surfaces of the treated and untreated phosphor layers. Figure 5a is a scanning electron micrograph of a phosphor layer surface without the sol-gel residue material and Figure 5b is a scanning electron micrograph of a phosphor layer surface with the sol-gel residue material. At this resolution, the structure of the interpenetrating thin-film SiO₂ network in the sol-gel treated layer can be distinguished, but only because, at least in this particular sample, the silica network is not continuous but has apparently cracked during the drying and/or heat treatment steps. From the pulled-back edges of the cracked thin films, the film thickness can be seen to be roughly 0.2 - 0.4 micrometers.

The fluorescent yield of the silica-bonded and untreated phosphor layers were tested for fluorescence yield under ultraviolet excitation at 254 nm. The 254 nm radiation was supplied by a Sylvania G8T5 germicidal fluorescent lamp. An Ocean Optics SD2000 portable UV/VIS spectrometer was used to measure the spectrum reflected from the phosphor-coated substrates via a silica optical fiber. To quantify the fluorescence, a region of the spectrum was chosen where the phosphor emission is large and where no major atomic emission interferes. One such region is 565 nm, and the results of tests at this wavelength revealed that the silica-bonded phosphor layer emitted at about 98% of the unprotected phosphor layer.

A conventional cellophane tape test was employed to test both the strength of the phosphor layer and its adherence to the substrate. The tape was placed on the phosphor layer and pressed or "burnished" to ensure complete contact with the phosphors. The tape was then peeled away at right angles to the surface, and the degree of material removal was estimated. This test was applied to both the unprotected phosphor layer and to the sol-gel treated layer. The result was virtually complete removal of the unprotected phosphor from the glass substrate. In contrast, almost none of the protected phosphor layer was removed during the test.

While embodiments of the present invention have been described in the foregoing specification and drawings, it is to be understood that the present invention is defined by the following claims when read in light of the specification and drawings.

## Claims

1. A fluorescent lamp, comprising:
an ultraviolet radiation transmissive envelope having an interior enclosing a gas that emits ultraviolet radiation when electrically activated;
a first network of phosphor particles on an exterior surface of said envelope; and
a second network of a sol-gel residue material that (a) is transparent to visible light and ultraviolet radiation whose wavelength is at least 300 nm, (b) coats said phosphor particles, and (c) resists removal of said first network from said exterior surface, said second network being on the exterior surface and meshing within said first network.

2. The lamp of claim 1, wherein said sol-gel residue material comprises one of SiO₂, Al₂O₃, Y₂O₃ and Sc₂O₃.

3. The lamp of claim 1, wherein said gas is mercury-free.

4. A method of making a fluorescent lamp, comprising the steps of:
applying a first network of phosphor particles to an exterior surface of an ultraviolet radiation transmissive envelope whose interior is arranged to enclose a gas that emits ultraviolet radiation when electrically activated;
preparing a sol-gel precursor solution that, when dried, leaves a sol-gel residue material that (a) is transparent to visible light and ultraviolet radiation whose wavelength is at least 300 nm, (b) coats the phosphor particles, and (c) resists removal of the first network from the exterior surface;
placing the envelope with the first network applied to the exterior surface into the sol-gel precursor solution; and, after removing the envelope from the solution,
drying the sol-gel precursor solution to form a second network of the sol-gel residue material on the exterior surface that meshes within the first network.

5. The method of claim 4, wherein the drying step includes the steps of removing a solvent from the sol-gel precursor solution by drying the envelope in an air-filled oven at a first temperature, repeating the dipping and the solvent removing steps, and removing residual solvent by heating the envelope at a temperature higher than the first temperature in the oven.

6. The method of claim 4, wherein the sol-gel residue material is one of SiO₂, Al₂O₃, Y₂O₃ and Sc₂O₃.

7. The method of claim 4, wherein the gas is mercury-free.

8. A method of resisting removal of phosphor particles from an exterior of a fluorescent lamp, the phosphor particles being in a first network on an exterior surface of an ultraviolet radiation transmissive envelope whose interior is arranged to enclose a gas that emits ultraviolet radiation when electrically activated, the method comprising the steps of:
preparing a sol-gel precursor solution that, when dried, leaves a sol-gel residue material that (a) is transparent to visible light and ultraviolet radiation whose wavelength is at least 300 nm, (b) coats the phosphor particles, and (c) resists removal of the first network from the exterior surface;
placing the envelope with the first network applied to the exterior surface into the sol-gel precursor solution; and, after removing the envelope from the solution,
drying the sol-gel precursor solution to form a second network of the sol-gel residue material on the exterior surface that meshes within the first network.

9. The method of claim 8, wherein the drying step includes the steps of removing a solvent from the sol-gel precursor solution by drying the envelope in an air-filled oven at a first temperature, repeating the dipping and the solvent removing steps, and removing residual solvent by heating the envelope at a temperature higher than the first temperature in the oven.
